# EUROPÄISCHE PATENTSCHRIFT

(11) **EP 2 655 835 B1**
(45) Veröffentlichungstag und Bekanntmachung des Hinweises auf die Patenterteilung: **17.05.2017**
(21) Anmeldenummer: 11802367.0
(22) Anmeldetag: 19.12.2011
(51) Int. Cl.: F02D 9/10, F16K 1/22, F16D 3/04

(54) **VENTILEINHEIT**
VALVE UNIT
UNITÉ DE SOUPAPE

(30) Priorität: 20.12.2010 DE 102010055254
(43) Veröffentlichungstag der Anmeldung: 30.10.2013
(73) Patentinhaber: Continental Automotive GmbH, 30165 Hannover (DE)
(72) Erfinder: BONANNO, Rosario, 65812 Bad Soden (DE); WEIS, Christian, 55257 Budenheim (DE)
(86) Internationale Anmeldenummer: PCT/EP2011/073206
(87) Internationale Veröffentlichungsnummer: WO 2012/084796

(56) Entgegenhaltungen:
- EP-A1- 2 180 167
- WO-A1-2008/043600
- WO-A1-2010/103249
- JP-A- 2005 083 443

## Beschreibung

Gegenstand der Erfindung ist eine Ventileinheit mit einem Gehäuse, einer in dem Gehäuse drehbar angeordneten Klappe, welche mit einer im Gehäuse gelagerten Klappenwelle verbunden ist, einem Elektromotor zum Antrieb der Klappenwelle und einem Getriebe, welches zwischen dem Elektromotor und der Klappenwelle angeordnet ist, wobei zwischen der Klappenwelle und einer Welle des Getriebes eine aus einem klappenseitigen Bauteil, einem Zwischenstück und einem getriebeseitigen Bauteil bestehende Kupplung angeordnet ist, zumindest eines der drei Kupplungsteile mindestens zwei erste Ausnehmungen gleicher radialer Ausrichtung aufweist, mindestens zwei zweite Ausnehmungen angeordnet sind, welche senkrecht zu den ersten Ausnehmungen ausgerichtet sind, in die Ausnehmungen Formelemente eines benachbarten Bauteils der Kupplung eingreifen und die Ausnehmungen bezogen auf ihre radiale Ausrichtung eine größere Ausdehnung als die in sie eingreifenden Formelemente aufweisen.

Derartige Ventile werden beispielsweise als Abgasventile in Kraftfahrzeugen verwendet und sind bekannt. Aufgrund der hohen Temperaturen im Motorraum oder in der Ventileinheit kommt es zu thermisch bedingten Ausdehnungen, so dass die Wellen der Ventileinheit nicht mehr lagegenau zueinander ausgerichtet sind. Die Folge sind ein erhöhter Verschleiß, der sich nachteilig auf die Lebensdauer der Ventileinheit auswirkt, und die damit verbundene erschwerte Übertragung der Drehbewegung vom Elektromotor zur Klappe, was einen höheren Stromverbrauch am Elektromotor zur Folge hat.

Die WO 2010/103249 A1 offenbart eine Kupplung mit einem Zwischenstück, welches Ausnehmungen aufweist, in die Formelemente der beiden benachbarten Bauteile eingreifen. Das Zwischenstück weist zudem Abstandshalter auf. Damit besitzen alle drei Bauteile der Kupplung Elemente, die durch zusätzliche Biegevorgänge nach dem Stanzen des jeweiligen Bauteils erzeugt werden. Da alle drei Bauteile derart ausgebildet sind, ist die Herstellung dieser Kupplung relativ kostenintensiv. Sowohl Herstellung der Formelemente als auch der Abstandshalter erfordern an allen drei Teilen der Kupplung einen zusätzlichen Bearbeitungsaufwand.

Die EP 2 180 167 A1 ist auf ein Koppelelement gerichtet, welches federelastisch ausgebildet ist. Für die Federelastizität wird eine Torsionsfeder offenbart. Ein federelastisches Koppelelement verhindert, dass die Wellen der Ventileinheit lagegenau ausgerichtet werden können. Daher führt ein solches Koppelelement zu einem hohen Verschleiß.

Der Erfindung liegt daher die Aufgabe zugrunde, eine Ventileinheit zu schaffen, welche bei thermischen Belastungen einen geringen Verschleiß aufweist.

Erfindungsgemäß wird die Aufgabe dadurch gelöst, dass die Formelemente beider radialer Ausrichtungen am Zwischenstück angeordnet sind, wobei Formelemente gleicher radialer Ausrichtung an je einer Seite des Zwischenstücks angeordnet sind und in die entsprechend ausgerichteten Ausnehmungen des jeweils benachbarten Bauteils eingreifen und die Ausnehmungen als Schlitz oder Langloch ausgebildet sind.

Die Ausbildung der Kupplung ermöglicht, dass sich die Formelemente in den Ausnehmungen definiert bewegen können. Die zueinander senkrechte Anordnung der jeweiligen Ausnehmungen ermöglicht eine radiale Relativbewegung in x- und y-Richtung. Eine entsprechend tiefe Gestaltung der Ausnehmungen und der Formelemente ermöglicht eine axiale Relativbewegung in z-Richtung. Infolge dessen erlaubt es die Kupplung, einen Wellenversatz zwischen der Klappenwelle und der gegenüberstehenden Welle des Getriebes aufgrund thermischer Belastungen zu kompensieren. Durch den Ausgleich des Wellenversatzes mittels der Kupplung wird das Einbringen unerwünschter Kräfte und Momente in das Getriebe und den Elektromotor der Ventileinheit vermieden, beziehungsweise auf ein Minimum reduziert.

Die Ausnehmungen gestalten sich besonders einfach, wenn sie als Schlitz oder Langloch ausgebildet sind. Bei einer großen Dicke des entsprechenden Kupplungsbauteils kann es dagegen vorteilhaft sein, die Ausnehmungen lediglich als Nut und nicht das Bauteil durchdringend auszubilden.

Formelemente ermöglicht eine axiale Relativbewegung in z-Richtung. Infolge dessen erlaubt es die Kupplung, einen Wellenversatz zwischen der Klappenwelle und der gegenüberstehenden Welle des Getriebes aufgrund thermischer Belastungen zu kompensieren. Durch den Ausgleich des Wellenversatzes mittels der Kupplung wird das Einbringen unerwünschter Kräfte und Momente in das Getriebe und den Elektromotor der Ventileinheit vermieden, beziehungsweise auf ein Minimum reduziert.

Da die Relativbewegung zwischen den einzelnen Bauteilen gering ist, ermöglicht die Ausbildung der Ausnehmungen und der darin eingreifenden Formelemente bereits eine ausreichende Führung während der Relativbewegungen. Zur Montage der Kupplung müssen die einzelnen Bauteile wesentlich mehr zueinander bewegt werden. Hierbei hat es sich als vorteilhaft herausgestellt, dass zumindest ein Bauteil der Kupplung Führungselemente für die Relativbewegung gegenüber dem benachbarten Bauteil aufweist. Dadurch wird ein zusätzlicher Schutz gegen ein Verkanten erreicht.

In einer einfachen Ausgestaltung sind alle Ausnehmungen im Zwischenstück und die Formelemente an den benachbarten Bauteilen angeordnet sind, wobei die Formelemente eines Bauteils jeweils die gleiche radiale Ausrichtung aufweisen. So besitzt beispielsweise das klappenseitige Bauteil in y-Richtung ausgerichtete Formelemente, während die Formelemente am getriebeseitigen Bauteil in x-Richtung ausgerichtet sind.

In einer anderen Ausgestaltung sind die Formelemente beider radialer Ausrichtungen am Zwischenstück angeordnet, wobei Formelemente gleicher radialer Ausrichtung an je einer Seite des Zwischenstücks angeordnet sind und in die entsprechend ausgerichteten Ausnehmungen des jeweils benachbarten Bauteils eingreifen.

Die Kupplungsbauteile lassen sich kostengünstig herstellen, wenn zumindest eines der Bauteile der Kupplung aus Metall oder einer Metalllegierung, vorzugsweise aus Blech, besteht. Insbesondere Blechteile lassen sich durch Stanzen und gegebenenfalls anschließendem Umformen mit geringem Aufwand herstellen. Die Ausbildung als Blechteil ist insbesondere bei hoher thermischer Belastung von Vorteil.

Eine andere Ausgestaltung besteht darin, dass zumindest eines der Bauteile der Kupplung aus Kunststoff besteht, welches vorzugsweise mittels Spritzgießen hergestellt wird. Der Vorteil eines Kunststoffbauteils besteht in seinem geringen Gewicht. Aufgrund der gegenüber Metall geringeren thermischen Belastbarkeit von Kunststoff, sind insbesondere das Zwischenstück und das getriebeseitige Bauteil als Kunststoffbauteil geeignet. Sofern die thermische Belastung ausreichend gering ist, ist es jedoch denkbar, die gesamte Kupplung aus Kunststoff herzustellen.

Um den Wellenversatz weiter zu minimieren, ist es gemäß einer weiteren Ausgestaltung vorteilhaft, wenn zusätzlich zumindest ein Bauteil der Kupplung, vorzugsweise das klappenseitige Bauteil, mindestens einen Abstandshalter aufweist, an dem das benachbarte Bauteil der Kupplung anliegt. Der Abstandshalter hat den Vorteil, dass er zwei benachbarte Bauteile trennt, die anderenfalls flächig aneinander anliegen würden. Durch diese Trennung der Bauteile wird die direkte Wärmeleitung unterbrochen, wodurch die thermische Belastung des mehr zum Getriebe angeordneten Bauteils wesentlich sinkt.

Der Abstandshalter kann dabei ein separates Teil sein, welches mit dem entsprechenden Kupplungsbauteil verbunden ist. In einer kostengünstigen Ausbildung ist der Abstandshalter einteilig mit dem Kupplungsbauteil verbunden. Eine weitere Vereinfachung bei gleichzeitiger Einsparung von Bauraum wird erreicht, wenn der Abstandhalter in andere Funktionselemente, beispielsweise eine Führung, integriert ist. Eine derartige Führung würde in diesem Fall, das benachbarte Kupplungsbauteil mit Abstand zum eigenen Kupplungsbauteil führen.

An zwei Ausführungsbeispielen wird die Erfindung näher erläutert. Es zeigen:
- Figur 1: ein Abgasventil eines Kraftfahrzeugs,
- Figur 2: einen Teil der Ventileinheit aus Figur 1,
- Figur 3: eine Kupplung der Ventileinheit,
- Figur 4: die Kupplung in einer Explosionsdarstellung und
- Figur 5: eine zweite nicht zur Erfindung gehörige Ausführungsform der Kupplung.

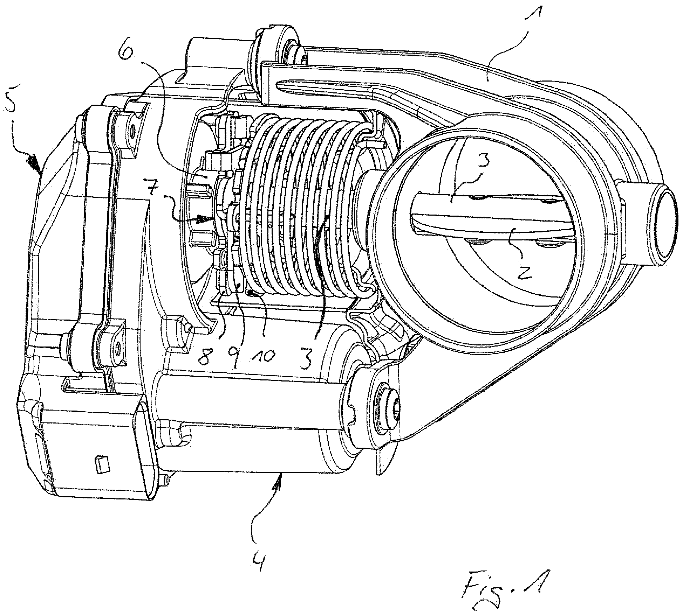

Die Ventileinheit in Figur 1 ist ein Abgasventil mit einem Gehäuse 1, einer in dem Gehäuse 1 drehbar angeordneten Klappe 2, welche mit einer im Gehäuse 1 gelagerten Klappenwelle 3 verbunden ist. Ein in einer separaten Kammer des Gehäuses 1 angeordneter Elektromotor 4 dient zum Antrieb der Klappenwelle 3. Die Übertragung der Drehbewegung des Elektromotors 4 auf die Klappenwelle 3 erfolgt über ein Getriebe 5, welches zwischen dem Elektromotor und der Klappenwelle angeordnet ist. Zwischen dem klappenseitigen Ausgang 6 des Getriebes und der Klappenwelle 3 ist eine Kupplung 7 angeordnet. Die Kupplung 7 besteht aus einem getriebeseitigem Bauteil 8, einem Zwischenstück 9 und einem klappenseitigen Bauteil 10.

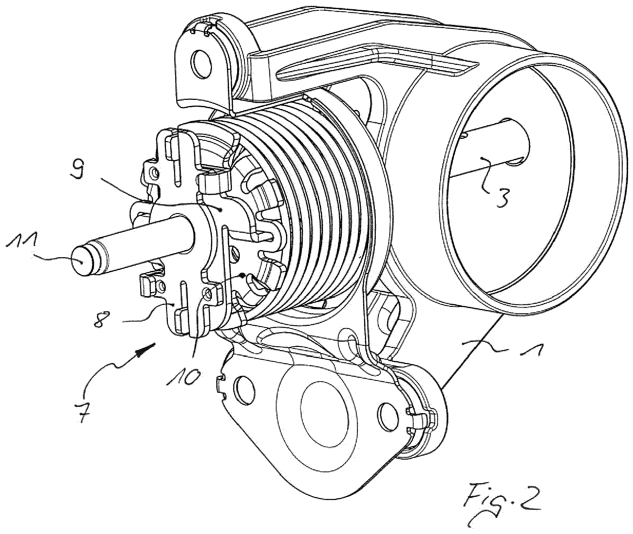

Figur 2 zeigt die Ventileinheit ohne das Getriebe. Lediglich die den klappenseitigen Ausgang 6 bildende Welle 11 des Getriebes 5 ist dargestellt. Die Welle 11 ist mit dem getriebeseitigen Bauteil 8 der Kupplung 7 fest verbunden. Das klappenseitige Bauteil 10 ist mit der Klappenwelle 3 fest verbunden. Der Aufbau der Kupplung 7 ist in den nachfolgenden Figuren beschrieben.

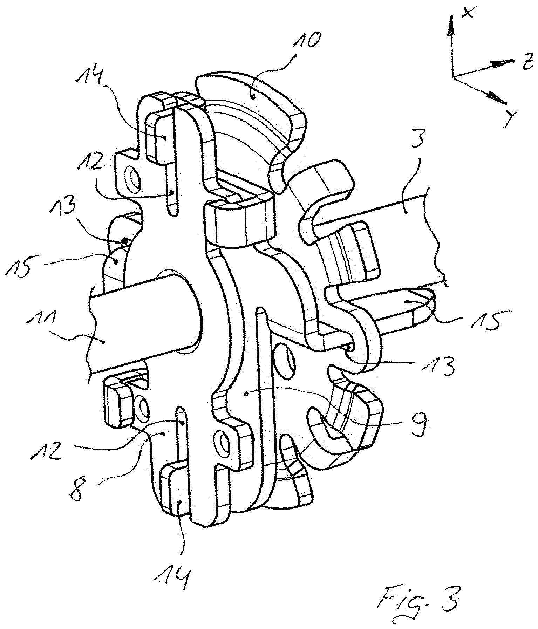

Die Kupplung 7 in Figur 3 zeigt das getriebeseitige Bauteil 8 mit der Welle 11, das Zwischenstück 9 und das klappenseitigen Bauteil 10 mit der Klappenwelle 3. Das Bauteil 8 weist zwei erste Ausnehmungen 12 gleicher radialer Ausrichtung auf, welche als Schlitze im Bauteil 8 ausgebildet sind. Das Bauteil 10 weist zwei zweite Ausnehmungen 13 gleicher radialer Ausrichtung auf, welche als Langlöcher im Bauteil 10 ausgebildet sind. Die Ausnehmungen 13 sind senkrecht zu den Ausnehmungen 12 ausgerichtet. Das Zwischenstück 9 besitzt zwei Formelemente 14 gleicher radialer Ausrichtung, die auf einer Seite des Zwischenstücks 9 ausgebildet sind und die in die Ausnehmungen 13 des Bauteils 8 eingreifen. Auf der gegenüberliegenden Seite des Zwischenstücks 9 sind zwei weitere Formelemente 15 gleicher Ausrichtung ausgebildet, die in die Ausnehmungen 14 des Bauteils 10 eingreifen. Die Ausnehmungen 12, 13 besitzen eine größere radiale Ausdehnung als die Formelemente 14, 15, so dass sich bei einem thermisch bedingten Wellenversatz der Klappenwelle 3 gegenüber der Welle 11 die Formelemente 14, 15 in den Ausnehmungen 13, 12 verschieben können, wodurch es zu Relativbewegungen zwischen den Kupplungsbauteilen 8, 9, 10 kommt. Die Schlitze 12 erlauben eine Bewegung in x-Richtung während die Langlöcher 13 eine Bewegung in y-Richtung ermöglichen. Aufgrund der axialen Ausdehnung der Formelemente 14, 15 ist zudem ein Relativbewegung der Kupplungsbauteile 8, 9, 10 in z-Richtung möglich.

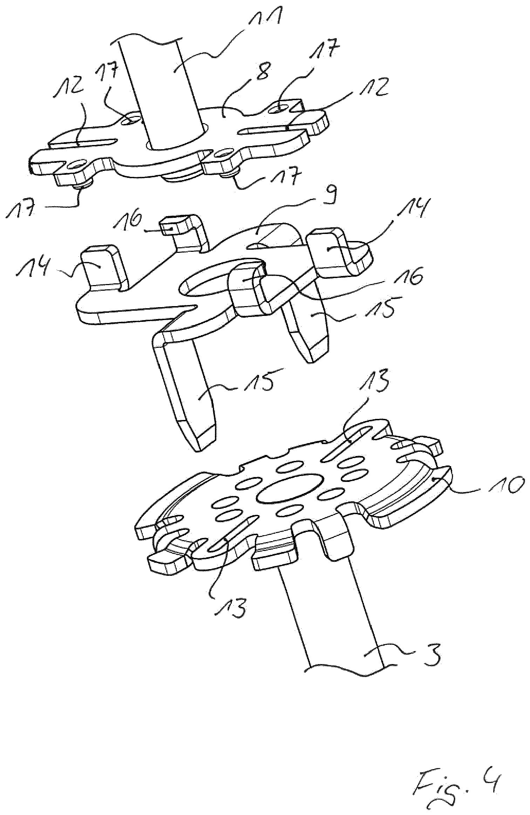

Figur 4 zeigt die Kupplungsbauteile 8, 9, 10 mit den Formelementen 14, 15 und den Ausnehmungen 12, 13. Die Kupplungsbauteile 8, 9, 10 bestehen aus Metall und sind als Blechteile durch Stanzen und Umformen hergestellt. Am Zwischenstück 9 sind weiter zwei Führungen 16 ausgebildet, welche das getriebeseitige Bauteil 8 im Bereich der Ausnehmungen 12 umschließen. Am Bauteil 8 sind vier Abstandhalter 17 angeordnet, die durch Prägen des Bauteils 8 erzeugt wurden. Es ist aber auch möglich, die Abstandshalter 17 als Stifte in das Bauteil 8 einzusetzen. Die Abstandshalter verhindern eine flächige Anlage des Bauteils 8 am Zwischenstück 9, wodurch der Wärmeübergang zwischen den beiden Kupplungsteilen 8, 9 auf ein Minimum reduziert wird.

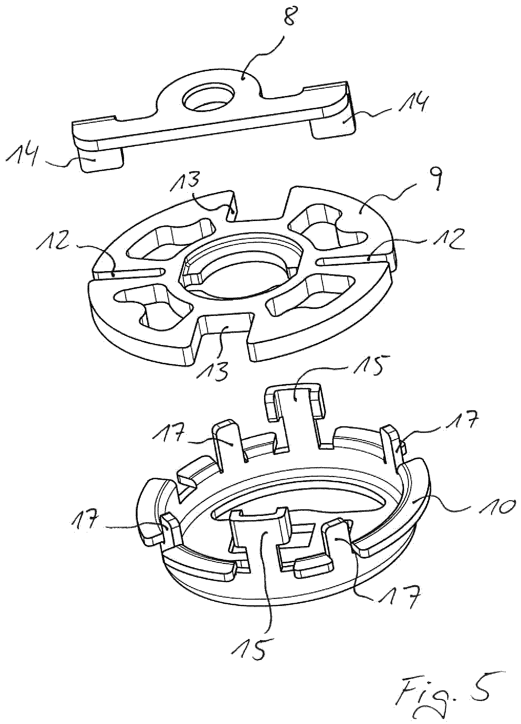

Figur 5 zeigt eine nicht zur Erfindung gehörige Ausführungsform der Kupplung 7 ohne die Wellen. Die Ausnehmungen 12, 13 sind am Zwischenstück 9 und die jeweils gleich radial ausgerichteten Formelemente 14, 15 an den entsprechenden Bauteilen 8, 9 angeordnet. Die Abstandhalter 17 sind am klappenseitigen Bauteil 10 ausgebildet.

## Patentansprüche

1. Ventileinheit mit einem Gehäuse (1), einer in dem Gehäuse (1) drehbar angeordneten Klappe (2), welche mit einer im Gehäuse (1) gelagerten Klappenwelle (3) verbunden ist, einem Elektromotor (4) zum Antrieb der Klappenwelle (3) und einem Getriebe (5), welches zwischen dem Elektromotor (4) und der Klappenwelle (3) angeordnet ist, einer zwischen der Klappenwelle (3) und einer Welle (11) des Getriebes (5) aus einem klappenseitigen Bauteil (10), einem Zwischenstück (9) und einem getriebeseitigen Bauteil (8) bestehenden Kupplung (7), wobei zumindest eines der drei Kupplungsteile (8, 9, 10) mindestens zwei erste Ausnehmungen (12) gleicher radialer Ausrichtung aufweist, mindestens zwei zweite Ausnehmungen (13) angeordnet sind, welche senkrecht zu den ersten Ausnehmungen (12) ausgerichtet sind, in die Ausnehmungen (12, 13) Formelemente (14, 15) eines benachbarten Bauteils (8, 9, 10) der Kupplung (7) eingreifen und die Ausnehmungen (12, 13) bezogen auf ihre radiale Ausrichtung eine größere Ausdehnung als die in sie eingreifenden Formelemente (14, 15) aufweisen, **dadurch gekennzeichnet, dass** die Formelemente (14, 15) beider radialer Ausrichtungen am Zwischenstück (9) angeordnet sind, wobei Formelemente (14, 15) gleicher radialer Ausrichtung an je einer Seite des Zwischenstücks (9) angeordnet sind und in die entsprechend ausgerichteten Ausnehmungen (12, 13) des jeweils benachbarten Bauteils (8, 10) eingreifen und die Ausnehmungen (12, 13) als Schlitz oder Langloch ausgebildet sind.

2. Ventileinheit nach Anspruch 1, **dadurch gekennzeichnet, dass** die Ausnehmungen (12, 13) in dem jeweiligen Bauteil als Nut ausgebildet sind.

3. Ventileinheit nach Anspruch 1 oder 2, **dadurch gekennzeichnet, dass** zumindest eines der Bauteile (8, 9, 10) der Kupplung (7) aus Metall oder einer Metalllegierung, vorzugsweise aus Blech, besteht.

4. Ventileinheit nach zumindest einem der Ansprüche 1 bis 3, **dadurch gekennzeichnet, dass** zumindest eines der Bauteile (8, 9, 10) der Kupplung (7) aus Kunststoff besteht.

5. ventileinheit nach zumindest einem der vorhergehenden Ansprüche, **dadurch gekennzeichnet, dass** zumindest ein Bauteil (8, 9, 10) der Kupplung (7) Führungselemente (16) aufweist für die Relativbewegung gegenüber dem benachbarten Bauteil (8, 9, 10).

6. Ventileinheit nach zumindest einem der vorhergehenden Ansprüche, **dadurch gekennzeichnet, dass** zumindest ein Bauteil (8, 9, 10) der Kupplung (7) mindestens einen Abstandshalter (17) aufweist, an dem das benachbarte Bauteil (8, 9, 10) der Kupplung (7) anliegt.

## Claims

1. Valve unit, comprising a housing (1), a flap (2) which is arranged rotatably in the housing (1) and is connected to a flap shaft (3) supported in the housing (1), an electric motor (4) for driving the flap shaft (3) and a transmission (5) arranged between the electric motor (4) and the flap shaft (3), a coupling (7) consisting of a flap-side component (10), an intermediate piece (9) and a transmission-side component (8) between the flap shaft (3) and a shaft (11) of the transmission (5), wherein at least one of the three coupling parts (8, 9, 10) has at least two first openings (12) having the same radial orientation, at least two second openings (13) are arranged to be aligned perpendicularly to the first openings (12), shaped elements (14, 15) of an adjacent component (8, 9, 10) of the coupling (7) engage in the openings (12, 13) and the openings (12, 13) have a greater extension in relation to their radial orientation than the shaped elements (14, 15) engaging therein, **characterized in that** the shaped elements (14, 15) having both radial orientations are arranged on the intermediate piece (9), shaped elements (14, 15) which have the same radial orientation each being arranged on one side of the intermediate piece (9) and engaging in the correspondingly oriented openings (12, 13) of the respective adjacent component (8, 10) and the openings (12, 13) being in the form of open-ended or closed slots.

2. Valve unit according to Claim 1, **characterized in that** the openings (12, 13) are formed as grooves in the respective component.

3. Valve unit according to Claim 1 or 2, **characterized in that** at least one of the components (8, 9, 10) of the coupling (7) is made of metal or a metal alloy, preferably of sheet metal.

4. Valve unit according to at least one of Claim 1 to 3, **characterized in that** at least one of the components (8, 9, 10) of the coupling (7) is made of plastics material.

5. Valve unit according to at least one of the preceding claims, **characterized in that** at least one component (8, 9, 10) of the coupling (7) has guide elements (16) for the relative movement with respect to the adjacent component (8, 9, 10).

6. Valve unit according to at least one of the preceding claims, **characterized in that** at least one component (8, 9, 10) of the coupling (7) has at least one spacer (17) against which the adjacent component (8, 9, 10) of the coupling (7) abuts.

## Revendications

1. Unité de soupape comprenant un boîtier (1), un clapet (2) disposé de manière rotative dans le boîtier (1), clapet qui est connecté à un arbre de clapet (3) supporté dans le boîtier (1), un moteur électrique (4) pour l'entraînement de l'arbre de clapet (3) et une transmission (5) qui est disposée entre le moteur électrique (4) et l'arbre de clapet (3), un accouplement (7) entre l'arbre de clapet (3) et un arbre (11) de la transmission (5), constitué d'un composant (10) du côté du clapet, d'une pièce intermédiaire (9), et d'un composant (8) du côté de la transmission, au moins l'une des trois parties d'accouplement (8, 9, 10) présentant au moins deux premiers évidements (12) de même orientation radiale, au moins deux deuxièmes évidements (13) étant prévus, lesquels sont orientés perpendiculairement aux premiers évidements (12), des éléments façonnés (14, 15) d'un composant adjacent (8, 9, 10) de l'accouplement (7) s'engageant dans les évidements (12, 13) et les évidements (12, 13) présentant, par rapport à leur orientation radiale, une plus grande étendue que les éléments façonnés (14, 15) s'engageant dans ceux-ci, **caractérisée en ce que** les éléments façonnés (14, 15) des deux orientations radiales sont disposées sur la pièce intermédiaire (9), des éléments façonnés (14, 15) de même orientation radiale étant disposés sur chaque côté de la pièce intermédiaire (9) et s'engageant dans les évidements orientés de manière correspondante (12, 13) du composant respectif adjacent (8, 10), et les évidements (12, 13) étant réalisés sous forme de fente ou de trou oblong.

2. Unité de soupape selon la revendication 1, **caractérisée en ce que** les évidements (12, 13) sont réalisés dans chaque composant sous forme de rainure.

3. Unité de soupape selon la revendication 1 ou 2, **caractérisée en ce qu'**au moins l'un des composants (8, 9, 10) de l'accouplement (7) se compose de métal ou d'un alliage métallique, de préférence de tôle.

4. Unité de soupape selon au moins l'une quelconque des revendications 1 à 3, **caractérisée en ce qu'**au moins l'un des composants (8, 9, 10) de l'accouplement (7) se compose de plastique.

5. Unité de soupape selon au moins l'une quelconque des revendications précédentes, **caractérisée en ce qu'**au moins un composant (8, 9, 10) de l'accouplement (7) présente des éléments de guidage (16) pour le mouvement relatif par rapport au composant adjacent (8, 9, 10) .

6. Unité de soupape selon au moins l'une quelconque des revendications précédentes, **caractérisée en ce qu'**au moins un composant (8, 9, 10) de l'accouplement (7) présente au moins un élément d'espacement (17) au niveau duquel s'applique le composant adjacent (8, 9, 10) de l'accouplement (7).
